# EUROPEAN PATENT SPECIFICATION

(11) **EP 3 763 554 B1**
(45) Date of publication and mention of the grant of the patent: **04.09.2024**
(21) Application number: 19185946.1
(22) Date of filing: 12.07.2019
(51) Int. Cl.: B60J 7/22

(54) **OPEN-ROOF ASSEMBLY WITH A WIND DROP DEFLECTOR**
OFFENE DACHANORDNUNG MIT EINEM WINDABWEISER
ENSEMBLE DE TOIT OUVERT COMPORTANT UN DÉFLECTEUR ANTI-VENT

(43) Date of publication of application: 13.01.2021
(73) Proprietor: Inalfa Roof Systems Group B.V., 5807 GW Oostrum (NL)
(72) Inventor: Genutt, Ulli, 47057 Duisburg (DE); Hoeijmakers, Hans Hubertus Jozef, 5963 AE Hegelsom (NL)
(74) Representative: De Vries & Metman

(56) References cited:
- EP-A2- 1 491 377
- DE-A1- 102004 031 543
- DE-A1- 102011 056 728
- DE-B3- 10 336 361
- DE-U1- 202011 003 554
- JP-A- 2008 221 878
- US-A1- 2004 189 057

## Description

The invention relates to an open roof assembly for use in a roof of a vehicle and a corresponding method of preventing a wind drop on a face of a driver or a passenger of a vehicle having such an open roof assembly.

Open roof assemblies are well known in the art. The known open roof assemblies are arranged on a roof of a vehicle, wherein an opening is provided in the roof. A moveable closure member is selectively in an open position or in a closed position. In the open position, the opening in the roof is at least partly exposed and an interior of the vehicle is in open contact with an exterior of the vehicle, e.g. for providing fresh air in the interior. In the closed position, the interior of the vehicle is closed and protected against rain and other external influences, for example. In the known open roof assembly, the closure member may be (semi-)transparent to allow sunlight to enter the interior, when the closure member is in the closed position.

When moving from the closed position to an open position, initially, a relatively small gap between a roof structure and the closure member is generated. When driving, an airflow will be generated through such gap and the airflow may flow towards a face of a driver or passenger in the passenger compartment of the vehicle. The phenomenon is known as wind drop, for example. Such a wind drop is not desirable.

DE102012013700 describes the problem of wind drop and proposes to provide an airflow deflection element at a tip of a rib structure. The rib structure is provided on an interior surface of the closure member and extends into the interior. When the closure member is in the closed position, the rib structure is arranged close to a front edge of the roof opening and covers elements like a wind deflector such to provide a visually appealing look. On the other hand, the rib structure deflects the above-mentioned airflow towards a driver or passenger, when the closure member moves from the closed position to the open position. The airflow deflection element redirects such airflow. Still, while the rib structure is provided for visual appearance, the flow deflection element reduces the visual appearance, in particular when the closure member is in the open position. Moreover, the airflow deflection element is subject to wear and tear, e.g. when coming into contact with other elements upon closing the closure member. Thus, the visual appearance is expected to deteriorate over the lifetime of the open roof assembly. Further, upon deterioration, the function of the airflow deflection element also deteriorates, resulting in a loss of its function and thus in a return of the wind drop.

DE10336361, Fig. 3, shows a cross-sectional view of a front section of an open roof assembly.

It is an object of the present invention to provide for an open roof assembly, wherein a wind drop is mitigated without the above-mentioned disadvantages.

In an aspect, the object is achieved in an open roof assembly according to claim 1. In the open roof assembly according to the present invention, the roof is provided with an opening and the open roof assembly comprises a moveable closure member. The opening has an opening front edge and the closure member is moveable between a closed position for closing the opening and an open position for at least partly exposing the opening. Further, the closure member has a member front edge and has an exterior surface and an opposing interior surface. The interior surface is arranged at an interior side of the vehicle. A first rib structure projects from the interior surface, wherein the first rib structure is arranged close to the opening front edge, when the closure member is in the closed position. A second rib structure projects also from the interior surface and the second rib structure is arranged in a longitudinal direction of the vehicle between the first rib structure and the member front edge.

As used herein, the terms "front" and "rear", occasionally in combination with the phrase "in a longitudinal direction of the vehicle", refer to their ordinary use in relation to vehicles, wherein as seen in a normal driving direction the front of the vehicle is the leading part of the vehicle, whereas the rear is the trailing part of the vehicle.

In the open roof assembly according to the present invention, a second rib structure is provided on the interior surface of the closure member for deflecting the airflow that causes the wind drop, before the airflow reaches the first rib structure. Thus, the airflow may be deflected towards a location where it does not cause wind drop. For example, the airflow may be directed towards a location in front of the opening front edge instead of into the passenger compartment.

Further, the second rib structure has a rib edge, wherein the rib edge is arranged opposite to the interior surface of the closure member, a distance between the interior surface and the rib edge varying over a length of the rib edge. In particular, the rib edge may be notched, castellated or toothed. Thus, the second rib structure may be formed with indentations or protrusions. Such a structure further affects the airflow and also affects sound generated by the airflow deflected by the second rib structure. For example, a composition of generated sound frequencies may be more pleasant if the second rib structure is castellated. Further, due to the height variations, the resulting airflow may be spread over a larger area, reducing local airflow speed and pressure. Thus, wind drop may be further mitigated.In an embodiment of the open roof assembly according to the present invention, the second rib structure is formed in an encapsulation of the member front edge. As well-known, at an edge of the closure member, in particular if the closure member comprises a glass panel, an encapsulation may be provided. An encapsulation of glass is a frame around the glass usually formed by injecting a polymer on its border. Glass encapsulation is well-known in the art and is therefore not further elucidated herein. Still, as an encapsulation is usually provided, the second rib structure may be formed together with or in the encapsulation cost-effectively and easily.

In an embodiment of the open roof assembly according to the present invention, the open roof assembly further comprises a wind deflector arranged in front of the opening front edge and having a moveably coupled support structure extending substantially parallel to the second rib structure, wherein the second rib structure of the closure member, in the closed position, is arranged in a longitudinal direction of the vehicle between the member front edge and the support structure. As above-mentioned the first rib structure may be provided to cover the wind deflector arranged in front of the opening front edge. In the closed position the closure member covers the wind deflector that is lowered into a cavity in the roof structure, usually a cavity in a frame structure of the open roof assembly. Such a part of the closure member extending over the wind deflector contributes to the wind drop. In order to reduce the wind drop, the airflow is preferably deflected as soon as the airflow is generated below the closure member at its member front edge. Therefore, the second rib structure is preferably arranged close to the member front edge, i.e. between the member front edge and the wind deflector support structure, when the closure member is in the closed position.

In a particular embodiment, the second rib structure extends from the interior surface to a rib edge, wherein in the closed position, the rib edge is arranged lower than a top surface of the support structure. When moving the closure member from the closed position to the open position, the member front edge is first lifted sufficiently for the rib edge of the second rib structure to move over the support structure of the wind deflector. By first sufficiently lifting the closure member, contact between the second rib structure and the wind deflector is prevented, thereby preventing wear and tear.

In an embodiment of the open roof assembly according to the present invention, the open roof assembly further comprises a seal arranged in front of the opening front edge, wherein the closure member, in the closed position, is in contact with the seal and, in the open position, is not in contact with the seal. Further, in the closed position, the seal is, in a longitudinal direction of the vehicle, arranged between the first rib structure and the second rib structure.

In an embodiment of the open roof assembly according to the present invention, the first rib structure is formed in an encapsulation of the member front edge and the first rib structure is provided with a reinforcement element. Similar to providing the second rib structure together with or in the encapsulation, the first rib structure may be provided with or in the encapsulation. As the first rib structure may be larger, the first rib structure may be strengthened by application of a reinforcing structure, e.g. a metal structure, arranged in the encapsulation.

In an embodiment of the open roof assembly according to the present invention, the first rib extends over the width of the opening.

In an embodiment of the open roof assembly according to the present invention, the second rib extends over the width of the opening. Still, it may be sufficient to provide the second rib structure only locally, i.e. at one or more predetermined positions along the width direction, wherein such predetermined positions may be selected based on the function of preventing a wind drop, in particular a wind drop on a face of a person in the vehicle.

In a further aspect of the present invention, a vehicle comprising an open roof assembly according to the present invention is provided.

In an even further aspect, the present invention provides a method of preventing a wind drop on a face of a driver or a passenger of a vehicle having an open roof assembly providing an opening in the roof of the vehicle. The open roof assembly comprises a moveable closure member and the opening has an opening front edge. Further, the closure member is arranged for closing the opening in a closed position and for at least partly exposing the opening in an open position, has a member front edge and has an exterior surface and an opposing interior surface, wherein the interior surface is arranged at an interior side of the vehicle. A first rib structure projects from the interior surface, wherein the first rib structure is arranged close to the opening front edge, when the closure member is in the closed position. The method according to the present invention comprises the steps of designing a second rib structure, projecting from the interior surface, to deflect an airflow flowing from the member front edge towards the first rib structure prior to the airflow arriving at the first rib structure, wherein the second rib structure has a rib edge (15), the rib edge being arranged opposite to the interior surface of the closure member, a distance between the interior surface and the rib edge varying over a length of the rib edge, in particular the rib edge being notched, castellated or toothed, and providing the second rib structure in a longitudinal direction of the vehicle between the member front edge and the first rib structure. Thus, the method according to the present invention provides the second rib structure to deflect an airflow that would otherwise cause wind drop.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2: illustrates the phenomenon of wind drop;
- Fig. 3 - 7: show a cross-section of a front part of an open roof assembly according to the present invention, each drawing in a different stage of an opening operation;
- Fig. 8A: shows a cross-section of a first embodiment of the rib structure according to the present invention; and
- Fig. 8B: shows a cross-section of a second embodiment of the rib structure according to the present invention.

The present invention will now be described with reference to the accompanying drawings, wherein the same reference numerals have been used to identify the same or similar elements throughout the several views.

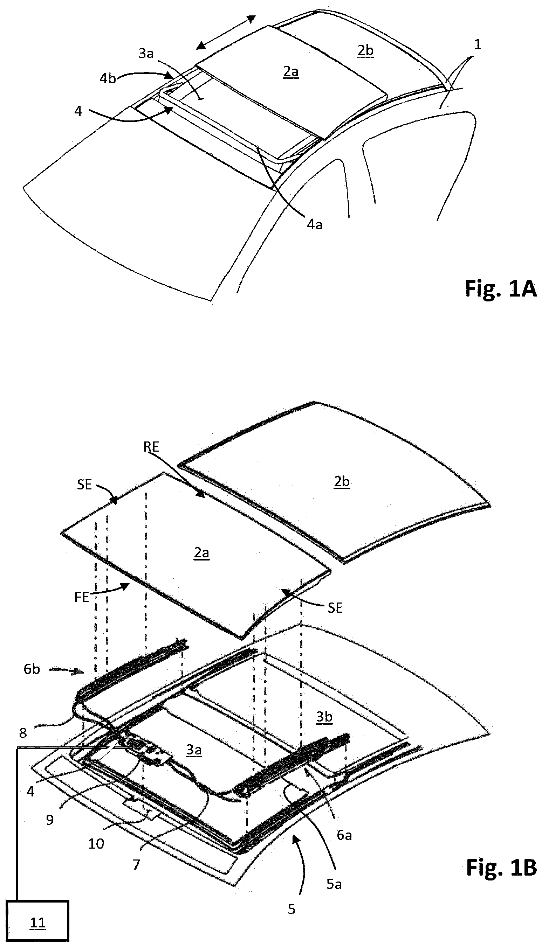

Fig. 1A illustrates a vehicle roof 1 having an open roof assembly arranged therein. The open roof assembly comprises a moveable panel 2a and a fixed panel 2b. The moveable panel 2a is also referred to herein as a closure member 2a, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior space through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts an airflow when the moveable panel 2a is in the open position. In its raised position, the wind deflector 4 reduces inconvenient noise due to the airflow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a drive motor 9.

The drive cables 7, 8 couple the drive motor 9 to the mechanisms of the respective guide assemblies 6a, 6b such that upon operating the drive motor 9, the mechanisms start to move. In particular, a core of the drive cable 7, 8 is moved by the drive motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, a drive motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the drive motor 9 is mounted near or below the front end FE of the moveable panel 2a at a recess 10. In another embodiment, the drive motor 9 may be positioned at any other suitable position or location. For example, the drive motor 9 may be arranged near or below the rear end RE of the moveable panel 2a or below the fixed panel 2b.

A control unit 11 is schematically illustrated and is operatively coupled to the drive motor 9. The control unit 11 may be any kind of processing unit, either a software controlled processing unit or a dedicated processing unit, like an ASIC, as well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 9 and thus the moveable roof assembly.

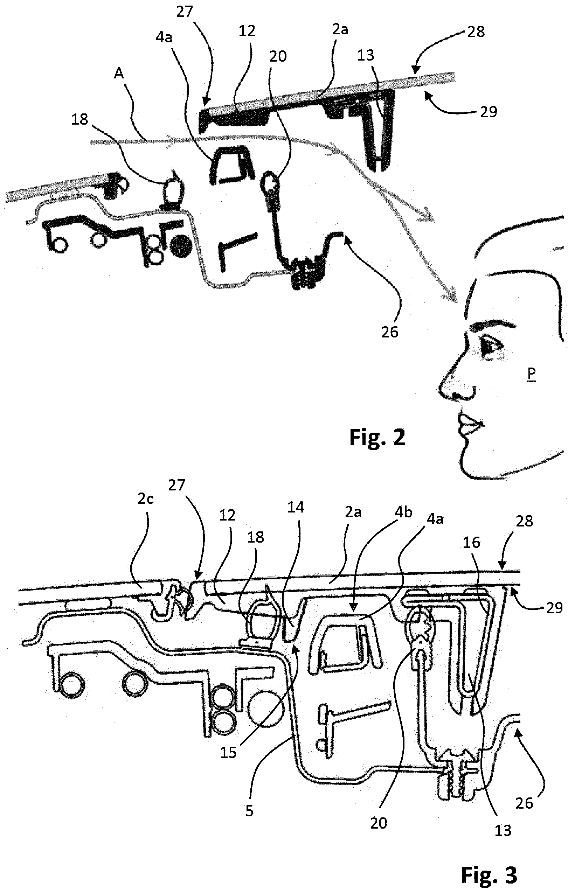

Fig. 2 shows the closure member 2a in cross-section. In the illustrated position, the open roof assembly is in an open position, wherein a member front edge 27 has been lifted and has started to slide rearwards. The closure member 2a has an exterior surface 28 and an interior surface 29, wherein the interior surface 29 is arranged at a side of a passenger compartment of a vehicle. A person P like a driver or a passenger in the passenger compartment is shown.

The closure member 2a is provided with an encapsulation 12 near its edges. In the encapsulation at the member front edge 27, a first rib structure 13 is provided on the interior surface 29 near the member front edge 27 extending downwards. In a closed position, the first rib structure 13 is arranged close to an opening front edge 26, e.g. for covering a noise seal 20, the support structure 4a of the wind deflector and a fluid seal 18.

In the illustrated stage of opening, a small gap is created between the support structure 4a and the member front edge 27. In particular, when driving, an airflow A is generated as a result. The airflow A is guided downwards by the first rib structure 13, leading to the airflow A being deflected towards a face of the person P. Due to the gap being relatively small, the airflow A may be a very local flow that unexpectedly is blown in the drivers or passengers face. Such a wind drop is undesirable.

The wind drop is prevented in accordance with the present invention by providing a second rib structure 14 as shown in Fig. 3. Fig. 3 shows the open roof assembly in the closed position, wherein the member front edge 27 is arranged against a front panel 2c. The front panel 2c may be a part of the open roof assembly or may be a part of a vehicle body.

The second rib structure 14 in the embodiment of Fig. 3 is formed on the interior surface 29 in the encapsulation 12 at the member front edge 27 and extends from the interior surface 29 to a rib edge 15. The second rib structure 14 is arranged between the member front edge 27 and the first rib structure 13. The first rib structure 13 is formed in the encapsulation 12 with a reinforcement 16, while the second rib structure 14 is formed without a reinforcement. Of course, depending on requirements and design aspects, each of the rib structures 13, 14 may be formed with or without a reinforcement. For example, a hollow reinforcement may be provided to reduce an amount of encapsulation material needed to form the second rib structure 14.

As is explained hereinbelow in more detail, the second rib structure 14 is arranged and configured to deflect the airflow A (Fig. 2) before the airflow A reaches the first rib structure 13, wherein the airflow A is deflected such that the airflow A does not flow directly to the person P. In the closed position as illustrated in Fig. 3, the second rib structure 14 is arranged between the fluid seal 18 and the support structure 4a of the wind deflector. In another embodiment, the second rib structure 14 may be arranged at another position. For example, the second rib structure 14 may be arranged in front of the fluid seal 18 or it may be arranged between the support structure 4a and the noise seal 20, depending on the airflow generated by the different elements and structures and provided that such airflow is deflected away from the person P.

The support structure 4a is a part of the hingedly or otherwise moveably arranged wind deflector. In the illustrated embodiment, in the closed position, the rib edge 15 is arranged lower than a top surface 4b of the support structure 4a. When the closure member 2a starts to open, the support structure 4a of the wind deflector may start to move upward towards the closure member 2a. When designing the open roof assembly with a second rib structure 14 and a moveable wind deflector, the movement of the support structure 4a and the movement of the closure member 2a and in particular the trajectory of the second rib structure 14 need to be adapted to each other to prevent undesired contact between the wind deflector and the second rib structure 14, taking into account any possible vibrations, for example.

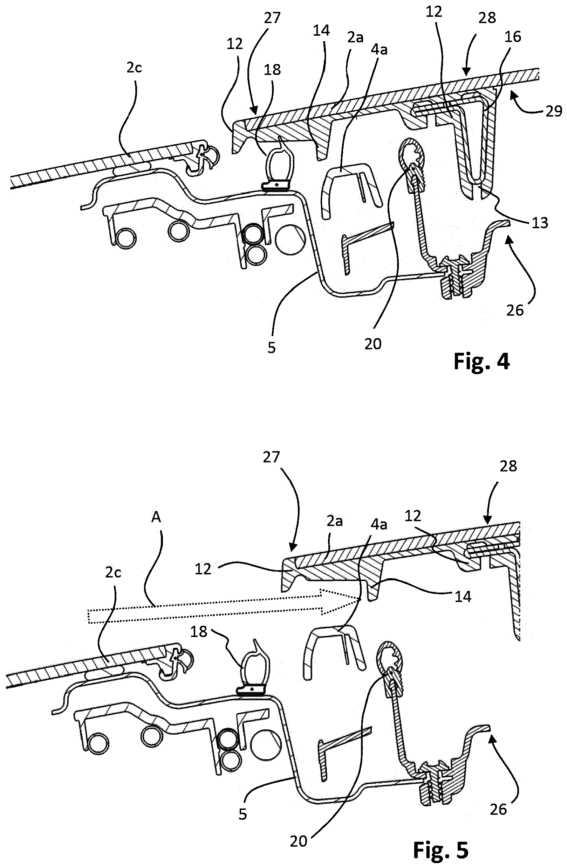

Fig. 4 shows a stage of opening the closure member 2a, wherein the member front edge 27 has started to lift upward and to move rearward. The second rib structure 14 is above the support structure 4a, while the support structure 4a is kept down.

In the position of Fig. 4, there are only minor gaps to allow an airflow. Any airflow is deflected downward by the first rib structure 13 and does not lead to wind drop.

Fig. 5 shows a stage of opening the closure member 2a, wherein the closure member 2a has moved further upward and further rearward compared to the stage of Fig. 4. In this stage, a significant gap is created and an airflow A is developed. In view of driving direction, a direction of the airflow A may be expected to be straight from over the front panel 2c into the gap, as shown by arrow A. Instead of flowing directly towards the first rib structure 13, at least a part of the airflow A is deflected by the second rib structure 14. If only a part of the airflow A is deflected, the deflected part of the airflow A will affect the remainder of the airflow A such that the whole airflow A may be disturbed. Suitable design of the second rib structure 14 may thus prevent that the airflow A directly impinges on the first rib structure 13 and is deflected toward the person P.

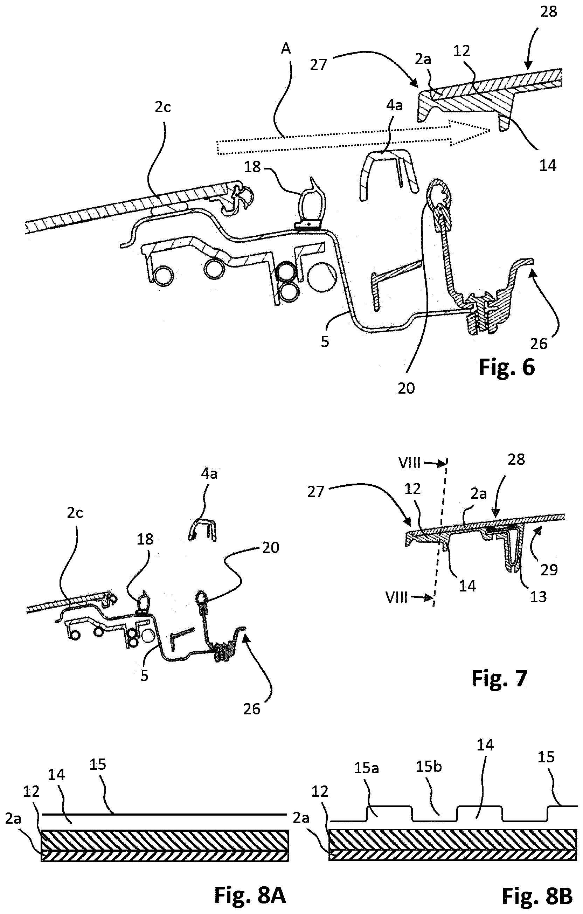

Fig. 6 shows a further stage of the opening of the closure member 2a. Similar to the situation as shown in Fig. 5, at least a part of the airflow A impinges on the second rib structure 14 and is deflected. In comparison to the situation as shown in Fig. 2, it is noted that the member front edge 27 has moved further rearward and the geometry of the second rib structure 14 is different compared to the geometry of the first rib structure 13 due to which in this stage no wind drop occurs.

Fig. 7 shows the stage wherein the closure member 2a has moved even further rearward and no straight airflow can be deflected toward a person P anymore.

Figs. 8A and 8B show a first and a second embodiment, respectively, of the second rib structure 14 along line VIII-VIII as indicated in Fig. 7. As shown in Fig. 8A, the second rib structure 14 has a straight rib edge 15. In the second embodiment, as shown in Fig. 8B, the rib edge 15 of the second rib structure 14 is castellated having protrusions 15a and indentations 15b. It has been found that the presence of the indentations 15b and protrusions 15a does not significantly affect the function of the second rib structure 14, but they affect noise generated by the airflow passing the rib edge 15 of the second rib structure 14. More in particular, the protrusions 15a and indentations 15b affect a frequency spectrum of the noise generated. Designing and providing a suitable pattern of protrusions 15a and indentations 15b may be used to provide for a comfortable sound generated by the airflow passing the second rib structure 14. So, while the rib edge 15 is shown with a castellation of equally sized protrusions 15a and indentations 15b, the size and shape of the protrusions 15a and indentations 15b is contemplated in order to improve the visual appearance and/or improve a noise generated when air is flowing over the rib edge 15. Further, the protrusions 15a and indentations 15b are not required to be equally shaped or sized over the width of the second rib structure 14. As an airflow in a centre part of the roof opening 3a (Fig. 1) may be different compared to the airflow near a side edge of the roof opening, the size and shape of the protrusions 15a and the indentations 15b may be adapted to such different airflow. Further, e.g. to spread generated noise frequencies over a large spectrum, variations in the protrusions 15a and the indentations 15b may be employed to generate different noise frequencies.

As apparent to those skilled in the art, the second rib structure 14 may at least extend over the length of the first rib structure 13, which usually corresponds to a width of the opening 3a (Fig. 1) in the roof.

It is contemplated that, in an embodiment, the second rib structure 14 may not be embedded in or formed by the encapsulation. The second rib structure 14 may be formed by any other material in any other suitable form or structure.

So, as above described, the second rib structure 14 according to the present invention is not limited in size, shape or position. The second rib structure 14 is provided for its function of deflecting an airflow and, preferably, at the same time for spreading the airflow over a larger area and/or generating a turbulent flow which each will aid in reducing a direct airflow into a face of a driver or passenger.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations and modifications within the scope of the following claims are not to be regarded as a departure from the scope of the invention as defined in the following claims, and all such modifications are intended to be included within the scope of the following claims.

## Claims

1. An open roof assembly for use in a roof of a vehicle, wherein the roof (1) is provided with an opening (3a) and the open roof assembly comprises a moveable closure member (2a),
the opening having an opening front edge (26),
the closure member being moveable between a closed position for closing the opening and an open position for at least partly exposing the opening and the closure member having a member front edge (27) and having an exterior surface (28) and an opposing interior surface (29), wherein the interior surface is arranged at an interior side of the vehicle,
wherein a first rib structure (13) projects from the interior surface, the first rib structure being arranged close to the opening front edge, when the closure member is in the closed position,
wherein a second rib structure (14) projects from the interior surface, the second rib structure being arranged in a longitudinal direction of the vehicle between the first rib structure and the member front edge for deflecting at least part of an airflow (A) through a gap between a roof structure and the closure member (2a) generated when the closure member is moving from the closed position to an open position,
the second rib structure has a rib edge (15), wherein the rib edge is arranged opposite to the interior surface of the closure member, **characterized in** a distance between the interior surface and the rib edge varying over a length of the rib edge, in particular the rib edge being notched, castellated or toothed.

2. The open roof assembly according to claim 1, wherein the second rib structure is formed in an encapsulation of the member front edge.

3. The open roof assembly according to claim 1, wherein the open roof assembly further comprises a wind deflector (4) arranged in front of the opening front edge and having a moveably coupled support structure (4a) extending substantially parallel to the second rib structure, wherein the second rib structure of the closure member, in the closed position, is arranged between the member front edge and the support structure as seen in a longitudinal direction of the vehicle.

4. The open roof assembly according to claim 3, wherein the second rib structure extends from the interior surface to a rib edge and wherein, in the closed position, the rib edge is arranged lower than a top surface of the support structure, and wherein, when moving the closure member from the closed position to the open position, the member front edge is first lifted sufficiently for the rib edge of the second rib structure to move over the support structure of the wind deflector.

5. The open roof assembly according to claim 1, wherein the open roof assembly further comprises a seal (20) arranged in front of the opening front edge,
wherein the closure member, in the closed position, is in contact with the seal and, in the open position, is not in contact with the seal, and
wherein, in the closed position, the seal is arranged between the first rib structure and the second rib structure as seen in the longitudinal direction of the vehicle.

6. The open roof assembly according to claim 1, wherein the first rib structure is formed in an encapsulation (12) of the member front edge and wherein the first rib structure is provided with a reinforcement element (16).

7. The open roof assembly according to claim 1, wherein the first rib extends over the width of the opening.

8. The open roof assembly according to claim 1, wherein the second rib extends over the width of the opening.

9. A vehicle comprising an open roof assembly according to any one of the preceding claims.

10. A method of preventing a wind drop on a face of a driver or a passenger (P) of a vehicle having an open roof assembly providing an opening (2a) in the roof of the vehicle, wherein
• the open roof assembly comprises a moveable closure member (3a),
• the opening has an opening front edge (26),
• the closure member is arranged for closing the opening in a closed position and for at least partly exposing the opening in an open position and
• the closure member has a member front edge (27) and has an exterior surface (28) and an opposing interior surface (29), wherein the interior surface is arranged at an interior side of the vehicle,
• a first rib structure (13) projects from the interior surface, the first rib structure being arranged close to the opening front edge, when the closure member is in the closed position,
the method comprising the steps of
designing a second rib structure (14), projecting from the interior surface, to deflect an airflow (A) flowing from the member front edge towards the first rib structure prior to the airflow arriving at the first rib structure, wherein the second rib structure has a rib edge (15), the rib edge being arranged opposite to the interior surface of the closure member, a distance between the interior surface and the rib edge varying over a length of the rib edge, in particular the rib edge being notched, castellated or toothed, and
providing the second rib structure in a longitudinal direction of the vehicle between the member front edge and the first rib structure.

## Patentansprüche

1. Offendachbaugruppe zur Verwendung in einem Dach eines Fahrzeugs, wobei das Dach (1) mit einer Öffnung (3a) versehen ist und die Offendachbaugruppe eine bewegbares Schließelement (2a) aufweist,
wobei die Öffnung einen Öffnungsvorderrand (26) hat,
wobei das Schließelement bewegbar ist zwischen einer geschlossen-Position zum Schließen der Öffnung und einer offen-Position zum wenigstens teilweisen Freilegen der Öffnung, und wobei das Schließelement einen Elementvorderrand (27) hat und eine Außenfläche (28) und eine gegenüberliegende Innenfläche (29) hat, wobei die Innenfläche auf einer Innenseite des Fahrzeugs angeordnet ist,
wobei eine erste Rippenstruktur (13) von der Innenfläche vorsteht, wobei die erste Rippenstruktur nahe zu dem Öffnungsvorderrand angeordnet ist, wenn das Schließelement in der geschlossen-Position ist,
wobei eine zweite Rippenstruktur (14) von der Innenfläche vorsteht, wobei die zweite Rippenstruktur in einer Längsrichtung des Fahrzeugs zwischen der ersten Rippenstruktur und dem Elementvorderrand angeordnet ist zum Ablenken wenigstens eines Teils einer Luftströmung (A) durch einen Spalt zwischen einer Dachstruktur und dem Schließelement (2a) hindurch, der erzeugt wird, wenn sich das Schließelement von der geschlossen-Position in eine offen-Position bewegt,
wobei die zweite Rippenstruktur einen Rippenrand (15) hat, wobei der Rippenrand gegenüberliegend zu der Innenfläche des Schließelements angeordnet ist, **dadurch gekennzeichnet, dass** ein Abstand zwischen der Innenfläche und dem Rippenrand über eine Länge des Rippenrands variiert, insbesondere, dass der Rippenrand mit Kerben versehen, mit Zinnen versehen oder gezahnt ist.

2. Offendachbaugruppe gemäß Anspruch 1, wobei die zweite Rippenstruktur in einer Einkapselung des Elementvorderrands ausgebildet ist.

3. Offendachbaugruppe gemäß Anspruch 1, wobei die Offendachbaugruppe ferner einen Winddeflektor (4) aufweist, der vor dem Öffnungsvorderrand angeordnet ist und eine bewegbar gekuppelte Haltestruktur (4a) hat, die sich im Wesentlichen parallel zu der zweiten Rippenstruktur erstreckt, wobei die zweite Rippenstruktur des Schließelements in der geschlossen-Position, gesehen in einer Längsrichtung des Fahrzeugs, zwischen dem Elementvorderrand und der Haltestruktur angeordnet ist.

4. Offendachbaugruppe gemäß Anspruch 3, wobei die zweite Rippenstruktur sich von der Innenfläche zu einem Rippenrand erstreckt und wobei in der geschlossen-Position der Rippenrand niedriger angeordnet ist als eine obere Fläche der Haltestruktur, und wobei, beim Bewegen des Schließelements von der geschlossen-Position in die offen-Position, der Elementvorderrand zunächst ausreichend angehoben wird, sodass der Rippenrand der zweiten Rippenstruktur sich über die Haltestruktur des Winddeflektors bewegen kann.

5. Offendachbaugruppe gemäß Anspruch 1, wobei die Offendachbaugruppe ferner eine Dichtung (20) aufweist, die vor dem Öffnungsvorderrand angeordnet ist,
wobei das Schließelement in der geschlossen-Position in Kontakt mit der Dichtung ist und in der offen-Position nicht in Kontakt mit der Dichtung ist, und
wobei in der geschlossen-Position, gesehen in der Längsrichtung des Fahrzeugs, die Dichtung zwischen der ersten Rippenstruktur und der zweiten Rippenstruktur angeordnet ist.

6. Offendachbaugruppe gemäß Anspruch 1, wobei die erste Rippenstruktur in einer Einkapselung (12) des Elementvorderrands ausgebildet ist und wobei die erste Rippenstruktur mit einem Verstärkungselement (16) versehen ist.

7. Offendachbaugruppe gemäß Anspruch 1, wobei die erste Rippe sich über die Breite der Öffnung erstreckt.

8. Offendachbaugruppe gemäß Anspruch 1, wobei die zweite Rippe sich über die Breite der Öffnung erstreckt.

9. Fahrzeug mit einer Offendachbaugruppe gemäß irgendeinem der vorigen Ansprüche.

10. Verfahren zum Verhindern eines Windfalls auf ein Gesicht eines Fahrers oder eines Mitfahrers (P) eines Fahrzeugs, das eine Offendachbaugruppe hat, bereitstellend eine Öffnung (2a) in dem Dach des Fahrzeugs, wobei
• die Offendachbaugruppe ein bewegbares Schließelement (3a) aufweist,
• die Öffnung einen Öffnungsvorderrand (26) hat,
• das Schließelement angeordnet ist zum Schließen der Öffnung in einer geschlossen-Position und zum wenigstens teilweisen Freilegen der Öffnung in einer offen-Position und
• das Schließelement einen Elementvorderrand (27) hat und eine Außenfläche (28) und eine gegenüberliegende Innenfläche (29) hat, wobei die Innenfläche auf einer Innenseite des Fahrzeugs angeordnet ist,
• eine erste Rippenstruktur (13) von der Innenfläche vorsteht, wobei erste Rippenstruktur nahe zu dem Öffnungsvorderrand angeordnet ist, wenn das Schließelement in der geschlossen-Position ist,
wobei das Verfahren aufweist die Schritte:
Designen einer zweiten Rippenstruktur (14), die von der Innenfläche vorsteht, um einen Luftstrom (A), der von dem Elementvorderrand in Richtung zu der ersten Rippenstruktur strömt, abzulenken bevor der Luftstrom bei der ersten Rippenstruktur ankommt, wobei die zweite Rippenstruktur einen Rippenrand (15) hat, wobei der Rippenrand gegenüberliegend zu der Innenfläche des Schließelements angeordnet ist, wobei ein Abstand zwischen der Innenfläche und dem Rippenrand über eine Länge des Rippenrands variiert, insbesondere wobei der Rippenrand mit Kerben versehen, mit Zinnen versehen oder gezahnt ist, und
Bereitstellen der zweiten Rippenstruktur in einer Längsrichtung des Fahrzeugs zwischen dem Elementvorderrand und der ersten Rippenstruktur.

## Revendications

1. Ensemble toit ouvrant destiné à être utilisé dans un toit d'un véhicule, dans lequel le toit (1) est pourvu d'une ouverture (3a), et l'ensemble toit ouvrant comprend un organe de fermeture (2a) mobile,
l'ouverture ayant un bord avant d'ouverture (26), l'organe de fermeture étant mobile entre une position fermée pour fermer l'ouverture et une position ouverte pour exposer au moins partiellement l'ouverture, et l'organe de fermeture ayant un bord avant d'organe (27) et ayant une surface extérieure (28) et une surface intérieure opposée (29), dans lequel la surface intérieure est agencée sur un côté intérieur du véhicule,
dans lequel une première structure de nervure (13) fait saillie depuis la surface intérieure, la première structure de nervure étant agencée à proximité du bord avant d'ouverture lorsque l'organe de fermeture est dans la position fermée,
dans lequel une deuxième structure de nervure (14) fait saillie depuis la surface intérieure, la deuxième structure de nervure étant agencée dans une direction longitudinale du véhicule entre la première structure de nervure et le bord avant d'organe pour dévier au moins une partie d'un flux d'air (A) à travers un espace entre une structure de toit et l'organe de fermeture (2a) généré lorsque l'organe de fermeture passe de la position fermée à une position ouverte,
la deuxième structure de nervure a un bord de nervure (15), dans lequel le bord de nervure est agencé à l'opposé de la surface intérieure de l'organe de fermeture, **caractérisé en ce qu'**une distance entre la surface intérieure et le bord de nervure varie sur une longueur du bord de nervure, en particulier le bord de nervure est cranté, crénelé ou denté.

2. Ensemble toit ouvrant selon la revendication 1, dans lequel la deuxième structure de nervure est formée dans une encapsulation du bord avant d'organe.

3. Ensemble toit ouvrant selon la revendication 1, dans lequel l'ensemble toit ouvrant comprend en outre un déflecteur de vent (4) agencé devant le bord avant d'ouverture et ayant une structure de support (4a) couplée de manière mobile, s'étendant sensiblement parallèlement à la deuxième structure de nervure, dans lequel dans la position fermée, la deuxième structure de nervure de l'organe de fermeture est agencée entre le bord avant d'organe et la structure de support en regardant dans une direction longitudinale du véhicule.

4. Ensemble toit ouvrant selon la revendication 3, dans lequel la deuxième structure de nervure s'étend de la surface intérieure à un bord de nervure, et dans lequel dans la position fermée, le bord de nervure est agencé plus bas qu'une surface supérieure de la structure de support, et dans lequel, lors du passage de l'organe de fermeture de la position fermée à la position ouverte, le bord avant d'organe est d'abord soulevé suffisamment pour que le bord de nervure de la deuxième structure de nervure passe au-dessus de la structure de support du déflecteur de vent.

5. Ensemble toit ouvrant selon la revendication 1, dans lequel l'ensemble toit ouvrant comprend en outre un joint (20) agencé devant le bord avant d'ouverture,
dans lequel dans la position fermée, l'organe de fermeture, est en contact avec le joint, et dans la position ouverte, il n'est pas en contact avec le joint, et
dans lequel dans la position fermée, le joint est agencé entre la première structure de nervure et la deuxième structure de nervure en regardant dans la direction longitudinale du véhicule.

6. Ensemble toit ouvrant selon la revendication 1, dans lequel la première structure de nervure est formée dans une encapsulation (12) du bord avant d'organe, et dans lequel la première structure de nervure est pourvue d'un élément de renforcement (16).

7. Ensemble toit ouvrant selon la revendication 1, dans lequel la première nervure s'étend sur la largeur de l'ouverture.

8. Ensemble toit ouvrant selon la revendication 1, dans lequel la deuxième nervure s'étend sur la largeur de l'ouverture.

9. Véhicule comprenant un ensemble toit ouvrant selon l'une quelconque des revendications précédentes.

10. Procédé de prévention de l'arrivée du vent sur le visage d'un conducteur ou d'un passager (P) d'un véhicule ayant un ensemble toit ouvrant offrant une ouverture (2a) dans le toit du véhicule, dans lequel
• l'ensemble toit ouvrant comprend un organe de fermeture mobile (3a),
• l'ouverture a un bord avant d'ouverture (26),
• l'organe de fermeture est agencé pour fermer l'ouverture dans une position fermée et pour exposer au moins partiellement l'ouverture dans une position ouverte et
• l'organe de fermeture a un bord avant d'organe (27) et a une surface extérieure (28) et une surface intérieure opposée (29), dans lequel la surface intérieure est agencée sur un côté intérieur du véhicule,
• une première structure de nervure (13) fait saillie depuis la surface intérieure, la première structure de nervure étant agencée à proximité du bord avant d'ouverture, lorsque l'organe de fermeture est dans la position fermée, le procédé comprenant les étapes suivantes
concevoir une deuxième structure de nervure (14) faisant saillie depuis la surface intérieure, pour dévier un flux d'air (A) circulant du bord avant d'organe vers la première structure de nervure avant que le flux d'air n'arrive à la première structure de nervure, dans lequel la deuxième structure de nervure a un bord de nervure (15), le bord de nervure étant agencé à l'opposé de la surface intérieure de l'organe de fermeture, une distance entre la surface intérieure et le bord de nervure variant sur une longueur du bord de nervure, en particulier le bord de nervure étant cranté, crénelé ou denté, et
prévoir la deuxième structure de nervure dans une direction longitudinale du véhicule entre le bord avant d'organe et la première structure de nervure.
